# EUROPEAN PATENT APPLICATION

(11) **EP 4 738 145 A1**
(43) Date of publication of application: **06.05.2026**
(21) Application number: 24210170.7
(22) Date of filing: 31.10.2024
(51) Int. Cl.: G06F 16/3332, G06F 16/334, G06F 16/335, G06F 16/34

(54) **METHOD AND SYSTEM FOR RETRIEVAL-AUGMENTED GENERATION**

(71) Applicant: Siemens Aktiengesellschaft, 80333 München (DE)
(72) Inventor: Brandt, Sebastian-Philipp, 81827 München (DE); Buckley, Mark, 81829 München (DE); Merk, Stephan, 80804 München (DE)
(74) Representative: Siemens Patent Attorneys

(57) **Abstract**

An extended retrieval-augmented generation system stores documents in a vector database (ME-VDB), wherein for at least one text chunk of each document, an embedding model (EM) computes a vector embedding (VE), and wherein both are stored in the vector database. Metadata of each document are included in the vector database as well. An application (EA) then receives a query from a user (U). The embedding model (EM) receives the query as input and forms a query embedding (QE). The vector database receives the query embedding as input and identifies documents matching the query embedding. The application retrieves the matching documents and their metadata. Next, the application sends at least one prompt containing the query and the retrieved documents to a large language model (LLM). Later, the application receives a response from the large language model. A metadata score generator computes at least one score for the retrieved metadata. In addition or as an alternative, a metadata summary generator (MSMG) sends at least one prompt containing the retrieved metadata to the large language model or to another large language model. The metadata summary generator then receives a summary of the retrieved metadata. Finally, the application outputs the response together with the at least one score and/or the summary to the user. The system supports the user in quickly assessing quality/trustworthiness of the LLM response by providing a score/summary based on the metadata (e.g. authors, publication date, rating) of the retrieved documents. The system can offer the user different orthogonal scores and/or summaries of the metadata of the retrieved documents, e.g. both the recency of retrieved documents and the diversity of the author affiliations, as opposed to RAG systems which choose or filter their data sources in advance.

## Description

### Technical Field

This application relates to retrieval-augmented generation. Retrieval-augmented generation (RAG) combines intelligent information retrieval with the power of natural language generation by large language models (LLMs), aiming to enhance content creation e.g. for chatbots or co-pilots and improve the quality of generated text. Retrieval-augmented generation leverages pre-existing knowledge and relevant information from large-scale text corpora, such as e.g. document databases, to augment the generation process.

### Background Art

Traditionally, large language models operate in a closed system, relying solely on the input provided during training. However, retrieval-augmented generation takes a step further by incorporating an intelligent retrieval component that searches for and retrieves relevant information from external sources to include it in the generated text. This retrieval process helps to enrich the generated content by providing additional context and up-to-date information.

A retrieval-augmented generation framework consists of two main components: a retrieval model and a generation model. The retrieval model is responsible for querying internal or external data sources and retrieving relevant documents based on a given input prompt, such as a question from a user. It can use a simple keyword search or more advanced techniques such as semantic matching and neural ranking to ensure the retrieval of the most pertinent documents. Examples for retrieved documents are web sites, electronic text documents on share points or service tickets in a service ticket database.

Once the retrieval model has obtained the relevant documents, they are passed on to the generation model. The generation model then incorporates these retrieved documents into the content generation process via a prompt template, ensuring that the generated text is contextually accurate, comprehensive, and aligned with the user's intent. This retrieval-augmented approach helps to alleviate issues like factual inaccuracies, outdated information, or lack of context that may arise in traditional generation models.

There are LLM systems that add inline links to the generated text which is typically achieved by putting snippets of the generated text to a web search (e.g. classical style Google or Bing) and e.g., using the highest ranked search result for the link.

### Summary of Invention

It is an object of the present invention to identify a problem in the prior art and to find a technical solution for this.

The invention is defined in the independent claims. Further advantageous arrangements and embodiments of the invention are set forth in the respective dependent claims.

According to the method for retrieval-augmented generation, the following operations are performed by components, wherein the components are hardware components and/or software components executed by one or more processors:
- storing, by a vector database, documents, wherein for at least one text chunk of each document, an embedding model computes a vector embedding, and wherein both are stored in the vector database,
- receiving, by an application, a query from a user,
- forming, by the embedding model receiving the query as input, a query embedding,
- identifying, by the vector database receiving the query embedding as input, documents matching the query embedding,
- retrieving, by the application, the matching documents,
- sending, by the application, at least one prompt containing the query and the retrieved documents to a large language model,
- receiving, by the application, a response from the large language model, and
- outputting, by the application, the response to the user.

The method is characterized by
- the storing operation including metadata of each document in the vector database, and
- the retrieving operation also retrieving the metadata of the matching documents,
and by the following operations that are performed by components, wherein the components
are hardware components and/or software components executed by one or more processors:
- computing, by a metadata score generator, at least one score for the retrieved metadata, wherein the outputting operation also outputs the at least one score to the user,
   **and/or**
- sending, by a metadata summary generator, at least one prompt containing the retrieved metadata to the large language model or to another large language model,
   **and**
- receiving, by the metadata summary generator, a summary of the retrieved metadata, wherein the outputting operation also outputs the summary to the user.

The system for retrieval-augmented generation comprises the following components, wherein the components are hardware components and/or software components executed by one or more processors:
- a vector database, configured for storing documents,
- an embedding model, configured for computing a vector embedding for at least one text chunk of each document,
- wherein the vector database is configured for storing the at least one text chunk and the at least one corresponding vector embedding for each document,
- an application, configured for receiving a query from a user,
- wherein the embedding model is configured for receiving the query as input and for forming a query embedding,
- wherein the vector database is configured for receiving the query embedding as input and for identifying documents matching the query embedding,
- wherein the application is configured for
   - retrieving the matching documents,
   - sending at least one prompt containing the query and the retrieved documents to a large language model,
   - receiving a response from the large language model, and
   - outputting the response to the user.

The system is characterized by
- the vector database being configured for storing metadata of each document, and
- the application being configured for retrieving the metadata of the matching documents,
   **and by**
- a metadata score generator, configured for computing at least one score for the retrieved metadata, wherein the application is configured for also outputting the at least one score to the user,
   **and/or**
- a metadata summary generator, configured for
   - sending at least one prompt containing the retrieved metadata to the large language model or to another large language model, **and**
   - receiving a summary of the retrieved metadata, wherein the application is configured for also outputting the summary to the user.

The following advantages and explanations are not necessarily the result of the object of the independent claims. Rather, they may be advantages and explanations that only apply to certain embodiments or variants.

The term "computer" should be interpreted as broadly as possible, in particular to cover all electronic devices with data processing properties. Computers can thus, for example, be personal computers, servers, clients, programmable logic controllers (PLCs), handheld computer systems, pocket PC devices, mobile radio devices, smartphones, or any other communication devices that can process data with computer support, for example processors or other electronic devices for data processing. Computers can in particular comprise one or more processors and memory units.

In connection with the invention, a "memory", "memory unit" or "memory module" and the like can mean, for example, a volatile memory in the form of random-access memory (RAM) or a permanent memory such as a hard disk, a solid-state drive or a disk.

In addition to the generated text, a conventional retrieval-augmented generation system can provide a list of links to the documents that were retrieved by the retrieval model. Such a provision, which is usually referred to as grounding, allows a user to check the information sources on which the generated text is mainly based. But this would require the user to browse and assess the list of retrieved documents and their metadata (e.g. author, publication date, document rating), a time-consuming task.

The method and system, or at least some of their embodiments, provide the user with a summary or a score based on the metadata of the retrieved documents to help her to quickly assess the quality and trustworthiness of the generated text. The metadata-based score and/or summary could include, for example:
- a number/diversity score of authors of the retrieved documents,
- a number/diversity of data sources (e.g., publishers, databases) from which the documents were retrieved (e.g., are the retrieved documents from only one or two data sources or from many different data sources), and/or
- if the retrieved documents include a rating or citation count, the min/mean/max rating/citation count of the retrieved documents.

Currently, the conventional approach to building large language models to a certain standard with regard to any metric of data-quality (such as timeliness, acceptance by authoritative organizations, or rating by a user community) is a 'global' pre-selection of training data to the desired standard. Similarly, a retrieval-augmented generation system could simply be built so as to only include databases or other data sources that exhibit the desired standard.

However, in both cases the system would not be able to evaluate the data quality of individual answers or retrieved documents in the RAG case. Furthermore, the conventional approach assumes that the notion of data source quality is the same for all users and can be preconfigured, whereas in fact users may have different requirements about data source quality depending on what query they send to a RAG system and on what their information need is. The method and system, or at least some of their embodiments, allow the user to evaluate the data source quality according to his or her requirements.

Some RAG systems do provide links to the retrieved documents but omit any readily useable qualification or quantification of data-quality. The method and system, or at least some of their embodiments, relieve the user from the burden of getting and assessing the metadata in this respect.

The method and system, or at least some of their embodiments, support the user in quickly assessing quality/trustworthiness of the LLM response by providing a score/summary based on the metadata (e.g. authors, publication date, rating) of the retrieved documents.

The method and system, or at least some of their embodiments, provide an alternative to simply outputting hyperlinks to the retrieved documents or to adding hyperlinks from snippets of the generated text to results of a web search. The method and system, or at least some of their embodiments, use metadata from the retrieved documents to generate metadata-based summaries or scores which help the user to quickly assess the quality and/or trustworthiness of the generated text.

The method and system, or at least some of their embodiments, can offer the user different orthogonal scores and/or summaries of the metadata of the retrieved documents, e.g. both the recency of retrieved documents and the diversity of the author affiliations, as opposed to systems which choose or filter their data sources in advance. The user is therefore free to use whichever of these dimensions is most helpful.

The method and system, or at least some of their embodiments, are robust in the presence of incomplete data. They rely on document metadata to provide summary information, but when such information is missing from some documents, they can still offer an answer to the user, optionally indicating to the user that the retrieved documents did not contain sufficient metadata to base a useful summary on.

The method and system, or at least some of their embodiments, can be implemented with little specialist knowledge. For each type of metadata which the invention is able to offer a summary about, it is enough to specify a prompt with which a suitable large language model can summarise the metadata of the retrieved documents.

The method and system, or at least some of their embodiments, can use world knowledge embedded in large language models to add information to the retrieved metadata.

### Description of Embodiments

In an embodiment of the method and system, the sending operation includes the query in the at least one prompt.

By including the query in the prompt, the metadata summary generator receives summaries from the respective large language model that are contextualized to the content and topic which the user asked about. This allows the current embodiment to use generic prompt templates and nevertheless offer relevant summaries depending on the topic under discussion. In addition, the current embodiment can offer the user information which was not contained in the original documents or their metadata if such information is contained in the large language model which backs the metadata summary generator.

In an embodiment of the method and system, the storing operation includes the metadata of each document by retrieving existing metadata attached to each document in a data source.

In an embodiment of the method and system, the storing operation includes the metadata of each document by extracting, by a preprocessor, the metadata from each document.

In an embodiment of the method and system, the storing operation includes the metadata of each document by retrieving the metadata for each document from a metadata store.

In an embodiment of the method and system, the outputting operation outputs the at least one score and/or the summary next to the response of the large language model as text.

In an embodiment of the method and system, the outputting operation outputs the at least one score next to the response of the large language model as a number.

In an embodiment of the method and system, the outputting operation outputs the at least one score next to the response of the large language model as a graphical symbol.

An embodiment of the system comprises a user interface, configured for receiving input from the application and outputting
- the response, and
- the at least one score and/or the summary,
to the user.

The computer program product comprises instructions which, when the program is executed by a computer, cause the computer to carry out the method.

The provisioning device for the computer program product stores and/or provides the computer program product.

### Brief Description of the Drawing

The foregoing and other aspects of the present invention are best understood from the following detailed description when read in connection with the accompanying drawings. For the purpose of illustrating the invention, the drawings show embodiments that are presently preferred.

However, the invention is not limited to the specific instrumentalities disclosed. The embodiments may be combined with each other. Furthermore, the embodiments may be combined with any of the features described above. Unless stated otherwise, identical reference signs denote the same features or functionally identical elements between drawings. Included in the drawings are the following Figures:
- Fig. 1: shows an embodiment,
- Fig. 2: shows another embodiment,
- Fig. 3: shows a conventional architecture of a retrieval-augmented generation system,
- Fig. 4: shows a first embodiment,
- Fig. 5: shows a second embodiment,
- Fig. 6: shows a flowchart of a possible exemplary embodiment.

In the following description, various aspects of the present invention and embodiments thereof will be described. However, it will be understood by those skilled in the art that embodiments may be practiced with only some or all aspects thereof. For purposes of explanation, specific numbers and configurations are set forth in order to provide a thorough understanding.

However, it will also be apparent to those skilled in the art that the embodiments may be practiced without these specific details.

The described components can each be hardware components or software components. For example, a software component can be a software module such as a software library; an individual procedure, subroutine, or function; or, depending on the programming paradigm, any other portion of software code that implements the function of the software component. A combination of hardware components and software components can occur, in particular, if some of the effects according to the invention are preferably exclusively implemented by special hardware (e.g., a processor in the form of an ASIC or FPGA) and some other part by software.

### Description of Examples

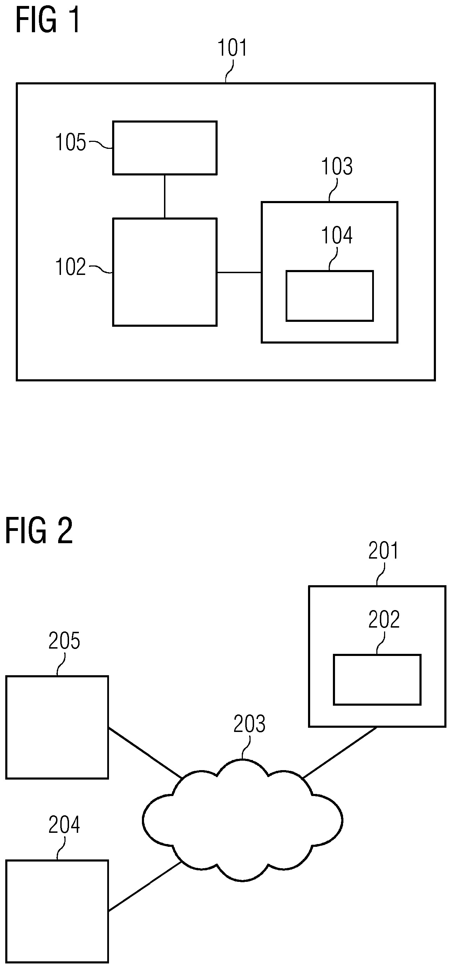

Fig. 1 shows a sample structure for computer-implementation of the invention which comprises:
- (101): computer system
- (102): processor
- (103): memory
- (104): computer program (product)
- (105): user interface

In this embodiment of the invention the computer program 104 comprises program instructions for carrying out the invention. The computer program 104 is stored in the memory 103 of the computer system 101. The computer system 101 may carry out the invention by executing the program instructions of the computer program 104 by the processor 102. Results of invention may be presented on the user interface 105. Alternatively, they may be stored in the memory 103 or on another suitable means for storing data.

Fig. 2 shows another sample structure for computer-implementation of the invention which comprises:
- (201): provisioning device
- (202): computer program (product)
- (203): computer network/Internet
- (204): computer system
- (205): mobile device/smartphone

In this embodiment the provisioning device 201 stores a computer program 202 which comprises program instructions for carrying out the invention. The provisioning device 201 provides the computer program 202 via a computer network/Internet 203. By way of example, a computer system 204 or a mobile device/smartphone 205 may load the computer program 202 and carry out the invention by executing the program instructions of the computer program 202.

In a variation of this embodiment, the provisioning device 201 is a computer-readable storage medium, for example a SD card, that stores the computer program 202 and is connected directly to the computer system 204 or the mobile device/smartphone 205 in order for it to load the computer program 202 and carry out the invention by executing the program instructions of the computer program 202.

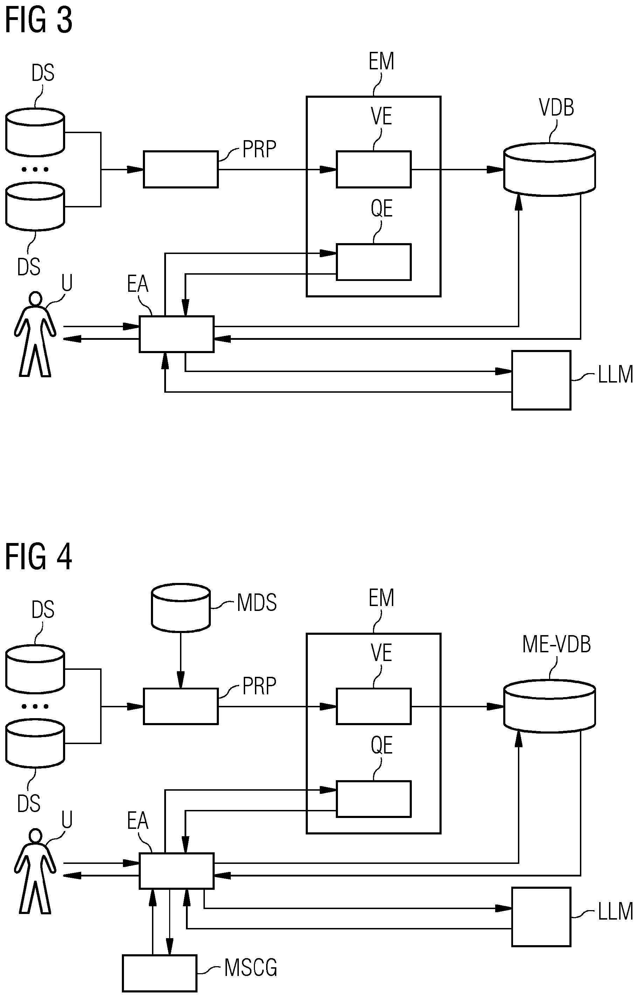

Preferably, the embodiments shown in Figs. 4 to 6 can be implemented with a structure as shown in Fig. 1 or Fig. 2.

Fig. 3 shows a conventional architecture of a retrieval-augmented generation system. The depicted system relies on a defined set of data sources DS with documents that form a data pool in a vector database VDB. If a user U enters a query, the retrieval-augmented generation system retrieves a relevant subset of documents from this data pool and prompts a large language model LLM with the original query and the retrieved documents as context to generate an answer. The depicted retrieval-augmented generation system therefore needs components for a set-up phase of the vector database VDB enabling efficient document retrieval as well as components for an actual operations phase in which user queries are answered.

Efficient retrieval of documents is based on vector embeddings VE of text chunks together with a similarity metrics between embeddings. The vector embeddings VE are representations of text chunks as mathematical vectors that are designed in a way that the embedding of two semantically similar text chunks results in two vectors that are close in the vector space with regard to the similarity metrics. There are various well-known algorithms for creating the vector embeddings VE. Any of these algorithms can serve as an embedding model EM. The same embedding model EM is used to embed the query of the user U, forming a query embedding QE.

The text chunks are created with standard natural language processing methods by splitting the documents into semantically meaningful chunks. However, a text chunk could also contain an entire document, for example a short document. As processing text chunks is a common procedure in natural language processing, the terms "documents" and "text chunks" will be used interchangeably in the following. The person skilled in the art knows when and how the documents need to be processed as text chunks.

The text chunks and the vector embeddings VE are stored in the vector database VDB which supports the efficient retrieval of documents that are similar to the query. This is achieved by embedding the documents and the query with the same embedding model EM and applying the similarity metrics to find embedded documents close to the query embedding QE.

In the set-up phase, the documents contained in the data sources DS are ingested into a pipeline consisting of a preprocessor PRP and the embedding model EM before the resulting vector embeddings VE (together with the text chunks) are inserted into the vector database VDB. The preprocessor PRP performs e.g. data cleansing as well as various well known text processing steps from natural language processing such as tokenization, and in particular the above-mentioned chunking operation.

During the operations phase, the user U enters the query in an enterprise app EA, which sends the query to the embedding model EM that generates the query embedding QE, employing the same embedding algorithm that was used while setting up the vector database VDB. The query embedding QE is then sent to the vector database VDB for retrieving documents that are similar to the query. Optionally the retrieved documents can be ranked e.g. based on their similarity with the query. Forming the query embedding QE and retrieving results from the vector database VDB comprises a retrieval phase.

In a following generation phase the retrieved documents are inserted into a prompt template. Then the original query together with the filled prompt template are sent to a large language model LLM which generates an answer that is returned to the enterprise app EA and shown to the user U.

The embodiments described in the following can be understood, for example, as inventive extensions to the above-described standard architecture of a conventional retrieval-augmented generation system.

Fig. 4 shows a first embodiment. A metadata-enriched retrieval-augmented generation system calculates scores from metadata of the retrieved documents. Entries in the vector database, in the embodiment shown in Fig. 4 implemented as a metadata-enriched vector database ME-VDB, are enriched with metadata of the corresponding documents. This is achieved by either passing through already existing metadata attached to the documents in the original data sources DS or by deriving relevant metadata in an extra metadata enrichment step in the preprocessor PRP. Depending on the metadata, the preprocessor PRP performs the metadata enrichment step either by extracting the metadata directly from a document (e.g. extracting the author from a research paper or using a rating field from a service ticket) or by looking up the metadata in a suitable metadata store MDS like e.g. an index of research papers (e.g. PubMed, Google Scholar) or a data catalog that stores metadata about documents.

In contrast to conventional retrieval-augmented generation systems, the metadata-enriched vector database ME-VDB will provide not only relevant documents for a query but also the metadata of the retrieved documents.

In the first embodiment, the enterprise app EA sends the metadata of the retrieved documents to a metadata score generator MSCG that calculates one or a set of scores from the metadata which is presented to the user U together with the output generated by the large language model LLM from the original query and the retrieved documents.

Example applications that benefit from a score based on the metadata of the retrieved documents are a service co-pilot and a literature search assistant.

The service co-pilot could be part of a system that supports service engineers e.g. for trains or turbines in solving service cases. It then allows a service engineer to provide an original service ticket from a service desk or her description of a service problem in natural language to the service co-pilot. The service co-pilot then retrieves similar service tickets from a database and uses a RAG approach to generate a solution proposal for the given service case.

Relevant metadata for the retrieved documents (here service tickets) could include:
- Author of information in service ticket
- Author role (scientist, engineer, project manager, product owner, etc.)
- Rating of solution in service ticket
- Date of service ticket
- Urgency of service ticket
- Customer that opened service ticket

Relevant scores on metadata of the retrieved documents (here service tickets) could be:
- An average rating of proposed solutions in the retrieved service tickets.
- A diversity of service agents that worked on the retrieved service tickets, which helps a service agent to assess whether the generated solution proposal is based on solutions from one or several experts.
- A time interval when the retrieved service tickets were processed which e.g. gives an indication whether the solutions in the service tickets are up-to-date or outdated.

The literature search assistant, on the other hand, could help in a search for existing research on a topic in a database of research papers or reports (e.g. from publicly funded research projects) by using retrieval-augmented generation to provide a summary on prior art on a certain topic.

Relevant metadata for the retrieved documents (here research papers) include:
- Author
- Author role (e.g. junior/senior scientist, engineer) or job title
- Author affiliation and region
- Author department (this could help with in-house data sources, so that a user can see whether the grounding sources all come from one department or whether the information is based on a broader collection of sources across company divisions)
- Various ratings, e.g. citation index
- Publication date (which implies recency)
- Publication type (e.g. book vs. blog, which could be a quality indicator for users)
- Conference
- Publisher

Relevant scores on metadata of the retrieved research papers could be:
- Statistics on citation index of papers used for the summary
- Author diversity of authors of papers used for the summary
- Affiliation diversity of authors of papers used for the summary

An example application that could benefit from a summary based on the metadata of the retrieved documents is a technical search assistant.

The technical search assistant could be a question-answering application for information about technical solutions (e.g. components for a building or factory automation solution). The result of the technical search could be augmented by metadata about the retrieved documents such as product catalogues or textbooks retrieved from the internet. Instead of just including hyperlinks to the retrieved documents with the result, a characterisation of their quality could be given, such as "the sources for this answer include four of the six largest providers of factory automation gear" or "the suppliers whose information was used to create this answer are all at least 20 years in business and all have a market cap of at least €10bn".

In other words, and returning to the description of the embodiment shown in Fig. 4, the metadata and the scores depend on the concrete application that determines which summary information on the documents used for generating the answer is relevant to the user U. For example, for the service co-pilot described above, the user U would be interested in an average rating of the proposed solutions in the retrieved service tickets or in the number of different service agents, i.e. the diversity of service agents (e.g. measured with the Simpson index) that worked on the service tickets. Relevant metadata for such an application would therefore be the ratings and the service agents working on the ticket that could be aggregated with a simple average or a Simpson index respectively. In general, scoring functions employed by the metadata score generator MSCG can be any aggregating functions on a set of one or several metadata types that calculate scores that are interpretable and relevant for the user U to assess the quality/trustworthiness of the retrieved documents from which the answer of the large language model LLM is generated.

Depending on the concrete application, the generated numeric, metadata-based score(s) can be presented to the user U either as number(s) or in a symbolic/graphical representation like traffic lights or symbols that can be easily interpreted by the user U.

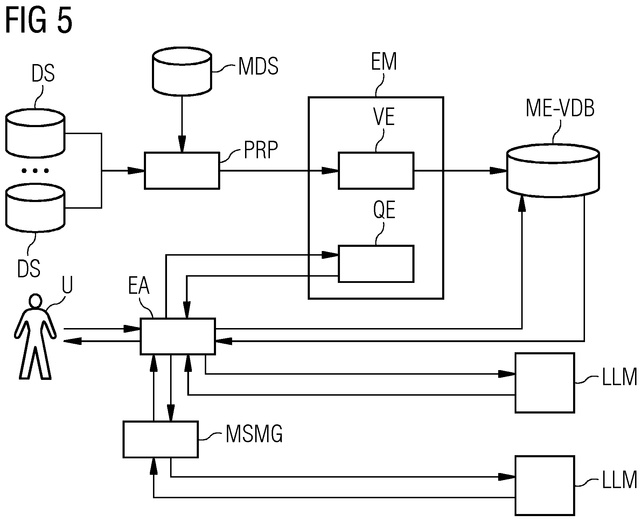

Fig. 5 shows a second embodiment. Here, the metadata score generator MSCG of Fig. 4 is replaced by a metadata summary generator MSMG which uses a large language model LLM to generate a summary of the metadata of the retrieved documents. The two large language models shown in Fig. 5, that is, the large language model LLM that is used to generate the answer from the original query and the retrieved documents, and the large language model used by the metadata summary generator MSMG can be the same, i.e. a single large language model, or distinct large language models of the same type, or different large language models.

The Metadata Summary Generator MSMG contains a set of prompt templates which are designed to elicit natural language summary information from the respective large language model LLM when instantiated with the metadata from the retrieved documents. Some prompt templates can be generic whereas others can be specifically configured to support the kind of metadata which is retrieved by the enterprise app EA.

An example of a summarisation prompt is given below in the context of the literature search use case described above, prompting the large language model LLM to provide a publication quality summary. If the metadata in the metadata-enriched vector database ME-VDB includes information about the publisher and publication year of the retrieved documents, the current embodiment will use a prompt as shown below to provide summary information about the style and quality of the documents with respect to the publisher. Information about the publisher is generally available for documents in the public domain, therefore this is an example of a generic summarisation prompt which the current embodiment can use across multiple enterprise apps.

Prompt template (contained in the Metadata Summary Generator MSMG):
*"You are an Al assistant who offers qualitative summaries of documents in the context of question answering systems. The following documents have been retrieved from a document store based on the user query {{query}}:*
*{foreach document:*
*{{Publisher}}* / *{{Title}} ({{Publication year}})*
*end foreach}*
*Please briefly summarise the quality of these documents in order to aid the interpretation of the answer to the query."*

Instantiated prompt as sent by the Metadata Summary Generator MSMG to the respective large language model LLM:
*"You are an Al assistant who offers qualitative summaries of documents in the context of question answering systems. The following documents have been retrieved from a document store based on the user query "What is the current state of nuclear fusion research?":*
*Publisher: Scientific American* / *"What Is the Future of Fusion Energy?" (2023)*
*Publisher: Medium* / *"The nuclear fusion era has arrived" (2022)*
*Publisher: Nature* / *"US nuclear-fusion lab enters new era: achieving 'ignition' over and over" (2023)*
*Publisher: NPR* / *"Are we on the brink of a nuclear fusion breakthrough?" (2024)*
*Please briefly summarise the quality of these documents in order to aid the interpretation of the answer to the query."*

Metadata-based summary as delivered by the respective large language model LLM and returned to the enterprise app EA for output to the user U:
*"The document sources contain a mixture of scientific and popular science publishers. The publishers are reputable, reliable sources and should therefore be of high journalistic quality. The documents are recent enough to reflect the current state of the art for nuclear fusion."*

By including the user query in the prompt, the metadata summary generator MSMG receives summaries from the respective large language model LLM that are contextualised to the content and topic which the user U asked about. This allows the current embodiment to use generic prompt templates and nevertheless offer relevant summaries depending on the topic under discussion. In addition, the current embodiment can offer the user U information which was not contained in the original documents or their metadata if such information is contained in the large language model LLM which backs the metadata summary generator MSMG, for example in the case shown above, the information about how reputable a publisher is.

The current embodiment finally presents the metadata-based summary to the user U in addition to the response of the large language model to the original query, potentially alongside metadata scores as described above, thereby allowing the user U to better interpret the answer and its sources.

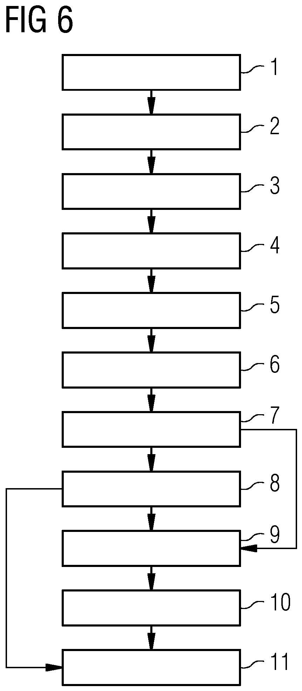

Fig. 6 shows a flowchart of a possible exemplary embodiment.

A first operation (1) stores documents in a vector database, wherein for at least one text chunk of each document, an embedding model computes a vector embedding, and wherein both are stored in the vector database. Metadata of each document are included in the vector database.

In a second operation (2) an application receives a query from a user.

In a third operation (3), the embedding model receives the query as input and forms a query embedding.

In a fourth operation (4), the vector database receives the query embedding as input and identifies documents matching the query embedding.

In a fifth operation (5), the application retrieves the matching documents and their metadata.

In a sixth operation (6), the application sends at least one prompt containing the query and the retrieved documents to a large language model.

In a seventh operation (7), the application receives a response from the large language model.

In an eight operation (8), a metadata score generator computes at least one score for the retrieved metadata.

A ninth operation (9) and a tenth operation (10) can be executed in addition or as an alternative to the eight operation (8).

In the ninth operation (9) a metadata summary generator sends at least one prompt containing the retrieved metadata to the large language model or to another large language model.

In the tenth operation (10) the metadata summary generator receives a summary of the retrieved metadata.

In an eleventh operation (11), the application outputs the response together with the at least one score and/or the summary to the user.

For example, the method can be executed by one or more processors. Examples of processors include a microcontroller or a microprocessor, an Application Specific Integrated Circuit (ASIC), or a neuromorphic microchip, in particular a neuromorphic processor unit. The processor can be part of any kind of computer, including mobile computing devices such as tablet computers, smartphones or laptops, or part of a server in a control room or cloud.

The above-described method may be implemented via a computer program product including one or more computer-readable storage media having stored thereon instructions executable by one or more processors of a computing system. Execution of the instructions causes the computing system to perform acts corresponding to the operations of the method described above.

The instructions for implementing processes or methods described herein may be provided on computer-readable storage media or memories, such as a cache, buffer, RAM, FLASH, removable media, hard drive, or other computer readable storage media. Computer readable storage media include various types of volatile and non-volatile storage media. The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code, and the like, operating alone or in combination. Likewise, processing strategies may include multiprocessing, multitasking, parallel processing, and the like.

The invention has been described in detail with reference to embodiments thereof and examples. Variations and modifications may, however, be effected within the spirit and scope of the invention covered by the claims. The phrase "A, B and/or C" as an alternative expression may provide that one or more of A, B and C may be used.

Independent of the grammatical term usage, individuals with male, female, or other gender identities are included within the term.

## Claims

1. A computer implemented method for retrieval-augmented generation, wherein the following operations are performed by components, and wherein the components are hardware components and/or software components executed by one or more processors:
- storing (1), by a vector database (VDB), documents, wherein for at least one text chunk of each document, an embedding model (EM) computes a vector embedding (VE), and wherein both are stored in the vector database (VDB),
- receiving (2), by an application (EA), a query from a user (U),
- forming (3), by the embedding model (EM) receiving the query as input, a query embedding (QE),
- identifying (4), by the vector database (VDB) receiving the query embedding (QE) as input, documents matching the query embedding (QE),
- retrieving (5), by the application (EA), the matching documents,
- sending (6), by the application (EA), at least one prompt containing the query and the retrieved documents to a large language model (LLM),
- receiving (7), by the application (EA), a response from the large language model (LLM), and
- outputting (11), by the application (EA), the response to the user (U),
**characterized by**
- the storing operation (1) including metadata of each document in the vector database (VDB), and
- the retrieving operation (5) also retrieving the metadata of the matching documents,
**and by the following operations:**
- computing (8), by a metadata score generator (MSCG), at least one score for the retrieved metadata, wherein the outputting operation (11) also outputs the at least one score to the user (U),
**and/or**
- sending (9), by a metadata summary generator (MSMG), at least one prompt containing the retrieved metadata to the large language model (LLM) or to another large language model, **and**
- receiving (10), by the metadata summary generator (MSMG), a summary of the retrieved metadata, wherein the outputting operation (11) also outputs the summary to the user (U).

2. The method of claim 1,
- wherein the sending operation (9) includes the query in the at least one prompt.

3. The method according to any of the preceding claims,
- wherein the storing operation (1) includes the metadata of each document by retrieving existing metadata attached to each document in a data source (DS).

4. The method according to any of the preceding claims 1 and 2,
- wherein the storing operation (1) includes the metadata of each document by extracting, by a preprocessor (PRP), the metadata from each document.

5. The method according to any of the preceding claims 1 and 2,
- wherein the storing operation (1) includes the metadata of each document by retrieving the metadata for each document from a metadata store (MDS).

6. The method according to any of the preceding claims,
- wherein the outputting operation (11) outputs the at least one score and/or the summary next to the response of the large language model (LLM) as text.

7. The method according to any of the preceding claims,
- wherein the outputting operation (11) outputs the at least one score next to the response of the large language model (LLM) as a number.

8. The method according to any of the preceding claims,
- wherein the outputting operation (11) outputs the at least one score next to the response of the large language model (LLM) as a graphical symbol.

9. A system for retrieval-augmented generation, comprising:
- a vector database (VDB), configured for storing documents,
- an embedding model (EM), configured for computing a vector embedding (VE) for at least one text chunk of each document,
- wherein the vector database (VDB) is configured for storing the at least one text chunk and the at least one corresponding vector embedding (VE) for each document,
- an application (EA), configured for receiving a query from a user (U),
- wherein the embedding model (EM) is configured for receiving the query as input and for forming a query embedding (QE),
- wherein the vector database (VDB) is configured for receiving the query embedding (QE) as input and for identifying documents matching the query embedding (QE),
- wherein the application (EA) is configured for
- retrieving the matching documents,
- sending at least one prompt containing the query and the retrieved documents to a large language model (LLM),
- receiving a response from the large language model (LLM), and
- outputting the response to the user (U),
**characterized by**
- the vector database (VDB) being configured for storing metadata of each document, and
- the application (EA) being configured for retrieving the metadata of the matching documents,
**and by**
- a metadata score generator (MSCG), configured for computing at least one score for the retrieved metadata, wherein the application (EA) is configured for also outputting the at least one score to the user (U),
**and/or**
- a metadata summary generator (MSMG), configured for
- sending at least one prompt containing the retrieved metadata to the large language model (LLM) or to another large language model, and
- receiving a summary of the retrieved metadata, wherein the application (EA) is configured for also outputting the summary to the user (U).

10. The system of claim 9,
- comprising a user interface, configured for receiving input from the application (EA) and outputting
- the response, **and**
- the at least one score **and/or** the summary,
to the user (U).

11. A computer program product comprising instructions which, when the program is executed by a computer, cause the computer to carry out a method according to one of the method claims.

12. A provisioning device for the computer program product according to the preceding claim, wherein the provisioning device stores and/or provides the computer program product.
